# EUROPEAN PATENT APPLICATION

(11) **EP 0 760 332 A1**
(43) Date of publication of application: **05.03.1997**
(21) Application number: 96202376.8
(22) Date of filing: 27.08.1996
(51) Int. Cl.: B62J 9/00

(54) **An assembly for attaching a bag to a bycicle and also a bag and a coupling element suitable for such an assembly**

(30) Priority: 29.08.1995 NL 1001083
(71) Applicant: HESLING PRODUCTS B.V., NL-5351 AB BERGHEM (NL)
(72) Inventor: Hesling, Franciscus Johannes Sybrandes, 5351 AB Berghem (NL)
(74) Representative: Veldman-Dijkers, Cornelia G.C., Ir.

(57) **Abstract**

An assembly (1) for attaching a bag (40) to a bicycle, which assembly (1) comprises a first coupling element (2), which is secured to the bag (40), and a second coupling element (3), which can be secured to the bicycle, which coupling elements can be detachably coupled together. The first coupling element (2) comprises a plate-shaped hook (5), which is connected, at least near an upper side, to a rear wall (7) of the bag (40) and which is spaced from the rear wall (7) near a bottom side. The second coupling element (3) comprises a recess (11) which is open to an upper side, which recess (11) is defined by two parallel plate-shaped parts (9,10) and two guide walls (30) extending substantially transversely to the plate-shaped parts (9,10), by means of which the plate-shaped parts (9,10) are interconnected, whilst the plate-shaped parts (9,10) extend at least partially between the guide walls (30). The plate-shaped hook (5) of the first coupling element (2) is moved into the recess (11) in a direction of insertion upon being coupled to the second coupling element (3) and is blocked against movement in a plane transversely to the direction of insertion by the plate-shaped parts (9,10) and the guide walls (30).

## Description

The invention relates to an assembly for attaching a bag to a bicycle, which assembly comprises a first coupling element, which is secured to said bag, and a second coupling element, which can be secured to said bicycle, which coupling elements an be detachably coupled together, whereby said first coupling element comprises a plate-shaped hook, which is connected, at least near an upper side, to a rear wall of said bag and which is spaced from said rear wall near a bottom side.

The invention furthermore relates to a bag and to a coupling element suitable for such an assembly.

In a similar assembly known from International Patent Application WO-93/24358 the first coupling element comprises a hook-shaped engaging piece and the second coupling element comprises a guide section provided with a groove. The engaging piece is inserted into the guide section in a relatively complicated manner, whereby the hook-shaped part of the engaging piece comes into engagement with the groove. In order to prevent the first coupling element connected to the bag from moving with respect to the second coupling element, the engaging piece and the guide section are provided with various cams and recesses. This makes the assembly relatively complicated.

The object of the invention is to provide an assembly wherein the coupling elements can be coupled together in a simple and reliable manner, whilst the construction is relatively simple.

This objective is accomplished with the assembly according to the invention in that said second coupling element comprises a recess which is open to an upper side, which recess is defined by two parallel plate-shaped parts and two guide walls extending substantially transversely to said plate-shaped parts, by means of which said plate-shaped parts are interconnected, whilst the plate-shaped parts extend at least partially between the guide walls, whereby the plate-shaped hook of the first coupling element is moved into the recess in a direction of insertion upon being coupled to the second coupling element and is blocked against movement in a plane transversely to the direction of insertion by said plate-shaped parts and said guide walls.

The plate-shaped hook is slid between the plate-shaped parts and the guide walls by means of a simple rectilinear movement in a direction of insertion. The plate-shaped hook is blocked against movement by the plate-shaped parts and the guide walls. In this manner a relatively simple but highly reliable construction is obtained. Like the engaging piece of the known assembly the plate-shaped hook has the advantage of projecting only slightly from the bag.

It is noted that from Dutch Patent Application NL-A-9400387 an assembly is known which is provided with a first coupling element, which comprises a plate-shaped clamping piece secured to a bag, and a second coupling element, which comprises a clamping bracket secured to the bicycle. The clamping piece is slid from above into the clamping bracket, which is provided with vertical clamping bodies, and fixed in a lowermost position between the two clamping bodies by the frictional forces that occur. An advantage of a clamping piece of this type is that it projects only slightly from the bag. A drawback of an assembly of this type is, however, that as a result of the frictional forces that occur relatively much force is required for inserting the clamping piece into the clamping bracket. In addition to that the required frictional force will no longer occur at a certain point of time, due to wear of the clamping piece and of the clamping bracket, as a result of which the clamping piece can move out of the clamping bracket at the bottom side and become detached undesirably.

One embodiment of the assembly according to the invention is characterized in that the assembly is provided with a locking mechanism, by means of which the plate-shaped hook can be locked against movement parallel to the direction of insertion.

As a result of this the bag is fixed with respect to the bicycle and the plate-shaped hook is prevented from moving undesirably in the direction of insertion, or opposite thereto, with respect to the second coupling element.

The invention will be explained in more detail with reference to the drawings, wherein:
Figure 1 shows an assembly according to the invention, with the bag being illustrated separated from the bicycle;
Figure 2 shows the assembly illustrated in Figure 1, with the bag being attached to the bicycle;
Figure 3 is a front view of the assembly shown in Figure 1;
Figure 4 is a side view of the assembly shown in Figure 1;
Figure 5 is a detail of the assembly shown in Figure 1;
Figures 6A and 6B show a plate-shaped hook according to a second embodiment of the assembly according to the invention;
Figures 7A-7E are various views of the assembly according to a second embodiment of the invention; and
Figures 8A and 8B show a plan view and a longitudinal sectional view respectively of a detail of the assembly shown in Figures 7A-7E.

Like parts are numbered alike in the Figures.

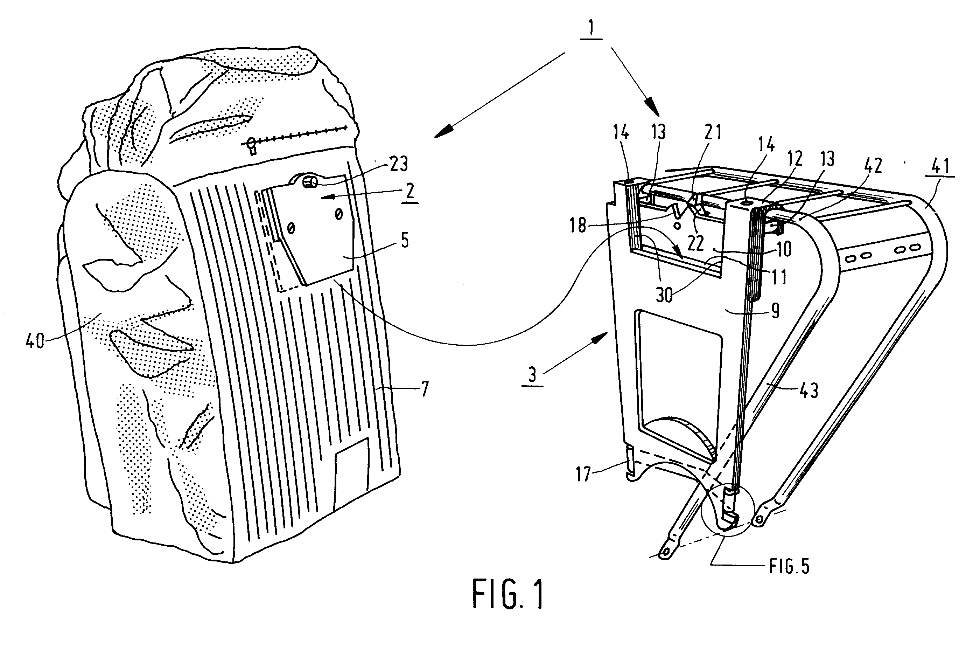

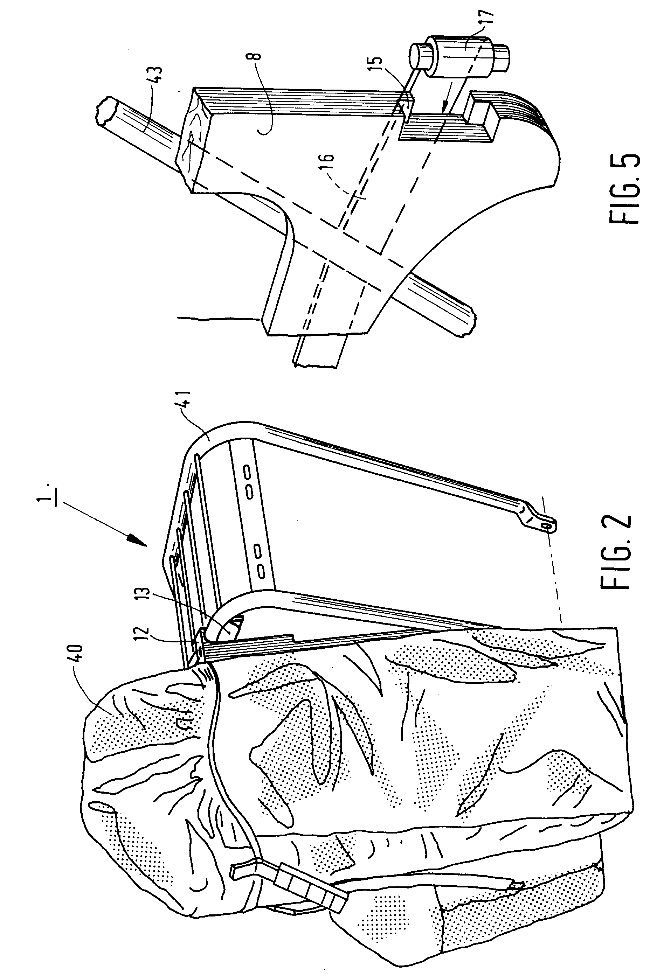

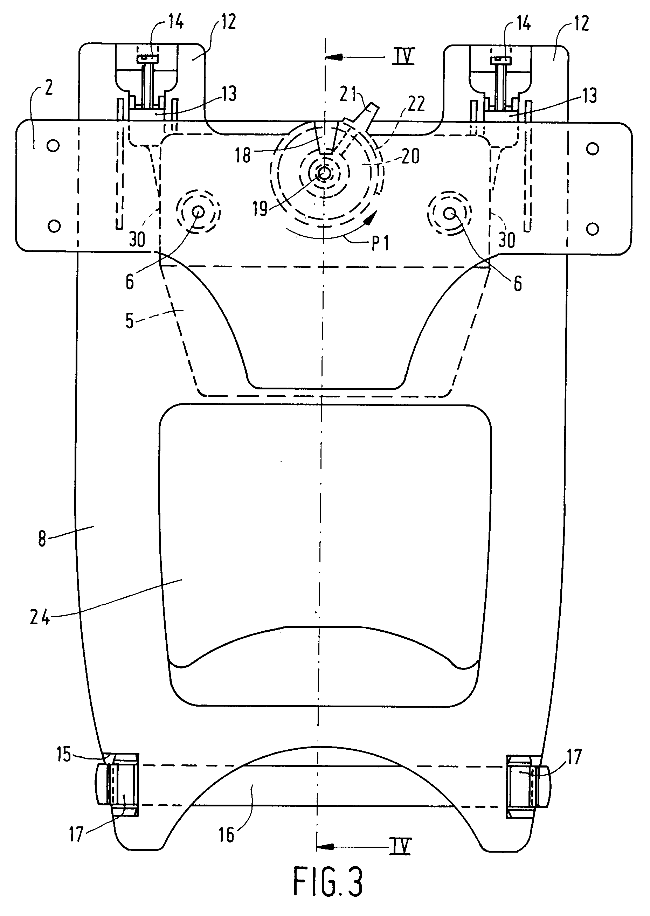

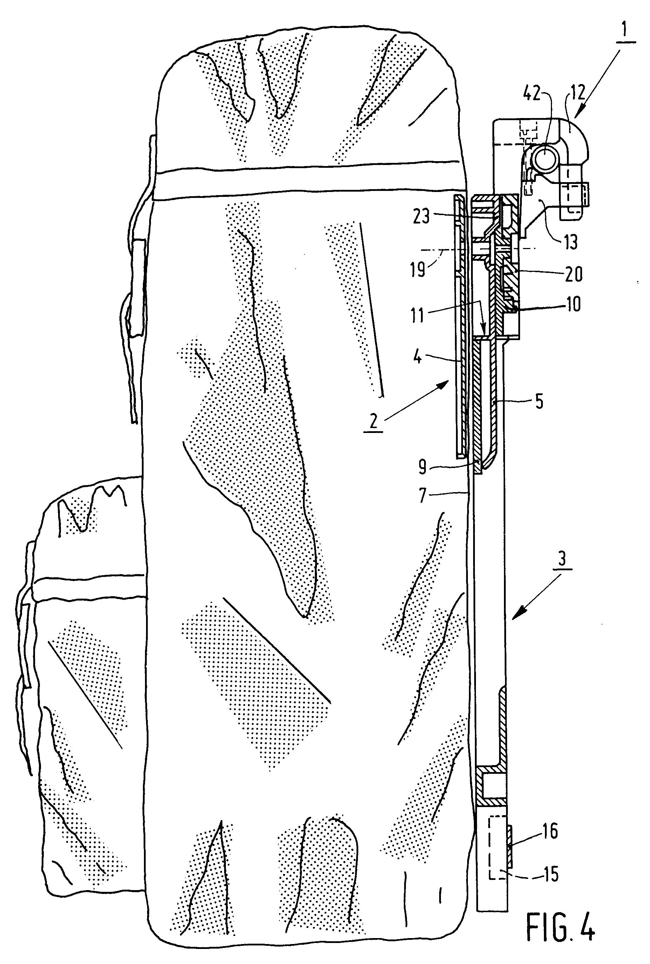

Figures 1 - 5 show an assembly 1, which is provided with a first coupling element 2, which can be attached to a bicycle bag 40, for example, and a second coupling element 3, which can be attached to a luggage carrier 41 of a bicycle (not shown), for example. First coupling element 2 comprises a panel 4 and a plate-shaped hook 5 extending parallel to said panel. Hook 5 is connected to panel 4 near an upper side by means of pop rivets which have been secured through openings 6, whereby a rear wall 7 of bag 40 extends between hook 5 and panel 4. Hook 5 is spaced from the rear wall 7 of bag 40 near a bottom side. Second coupling element 3 comprises a plate 8, which is near an upper side provided with two parallel plate-shaped parts 9, 10, which are staggered with respect to each other. Two spaced-apart guide walls 30 extend between the plate-shaped parts 9, 10. The guide walls 30 and the parts 9, 10 define a recess 11. Plate 8 is near its upper side provided with two U-shaped hooks 12, which can be hooked round a rod 42 of luggage carrier 41. The second coupling element 3 furthermore comprises two plastic fixing blocks 13, which are secured to hooks 12 by means of a bolt 14, and which are movable with respect to said hooks 12. Second coupling element 3 is near a bottom side provided with two notches positioned on either side of plate 12. Second coupling element 3 furthermore comprises an elastic band 16, which is at both ends provided with pins 17, which can be fitted into said notches 15. Plate 8 of the second coupling element 3 furthermore comprises a recess 18, which is open to the upper side, which recess can be closed by means of a cover element 20 which is rotatable about axis 19. Cover element 20 comprises a control knob 21, which is on one side provided with a cover 22, which can be slid over recess 18. Recess 18 is closed by rotating cover element 20 in a direction indicated by arrow P1, whilst recess 18 is released by rotating cover element 20 in a direction opposite to the direction indicated by arrow P1. First coupling element 2 is provided with a cam 23, which can be slipped into recess 18. For design reasons, and in order to save material and reduce the weight of second coupling element 3, plate 8 is provided with a hole 24.

A bag is attached to a bicycle in the following manner.

The hooks 12 of the second coupling element are hooked round a rod 42 of a luggage carrier 41 of a bicycle, after which the U-shape of the hooks 12 is closed by means of fixing blocks 13, and rod 42 is clamped between hooks 12 and fixing blocks 13 by tightening bolts 14. Then band 16 is connected to plate 8 by means of a pin 17 engaging in recess 15. Band 16 is passed over a substantially vertical rod 43 of luggage carrier 41, after which the other pin 17 is moved into the other recess 15 under elastic deformation of band 16, and band 16 is fixed tautly round luggage carrier 41.

Bag 40 is fitted with panel 4 located within said bag and with the plate-shaped hook located outside said bag, which panel and which plate-shaped hook are interconnected by means of pop rivets.

Then hook 5 is slid into the recess between the plate-shaped parts 9, 10 and guide walls 30 in a direction of insertion, whereby cam 23 of hook 5 slips into recess 18 of plate 8. Cover element 20 is rotated by means of knob 21, whereby cover 22 slides over the recess and cam 23 is retained in recess 18, as a result of which the bag is undetachably connected to the bicycle. In order to remove bag 40 from the bicycle cover element 20 is rotated in a direction opposite to the direction indicated by arrow P1, after which the plate-shaped hook 5 can be moved out of slot 11 and cam 23 moves out of recess 18.

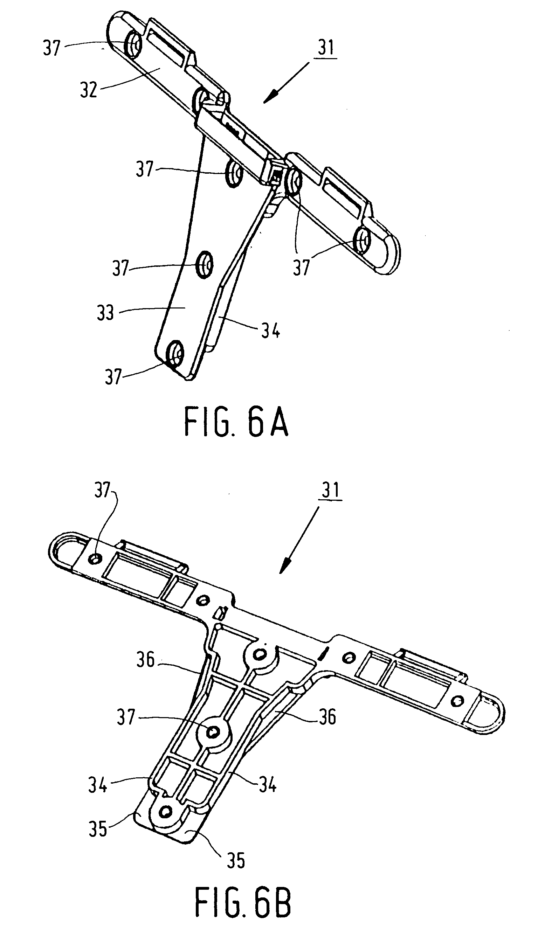

Figures 6A and 6B show a perspective front view and a perspective rear view respectively of a second embodiment of a first coupling element 31. Said coupling element 31 comprises an elongated strip 32 and a plate part 33 extending transversely to said elongated strip 32. Plate part 33 is provided with upright ribs 34 at a rear side, which ribs define a part butting against a rear side of a bicycle bag. Plate-shaped part 33 comprises two plate parts 35 at one end facing away from the elongated strip 32 and plate parts 36 positioned between plate parts 35 and strip 32. Plate parts 35 and 36 are positioned spaced from the rear wall of the bicycle bag in the situation in which first coupling element 31 is attached to said bicycle bag. First coupling element 31 is provided with holes 37 formed in elongated strip 32 as well as in part 33, through which fastening means are passed for attaching coupling element 31 to the rear side of the bicycle bag. As already indicated above, ribs 34 butt against the bicycle bag thereby, whilst plate parts 35, 36 are positioned spaced from the bicycle bag.

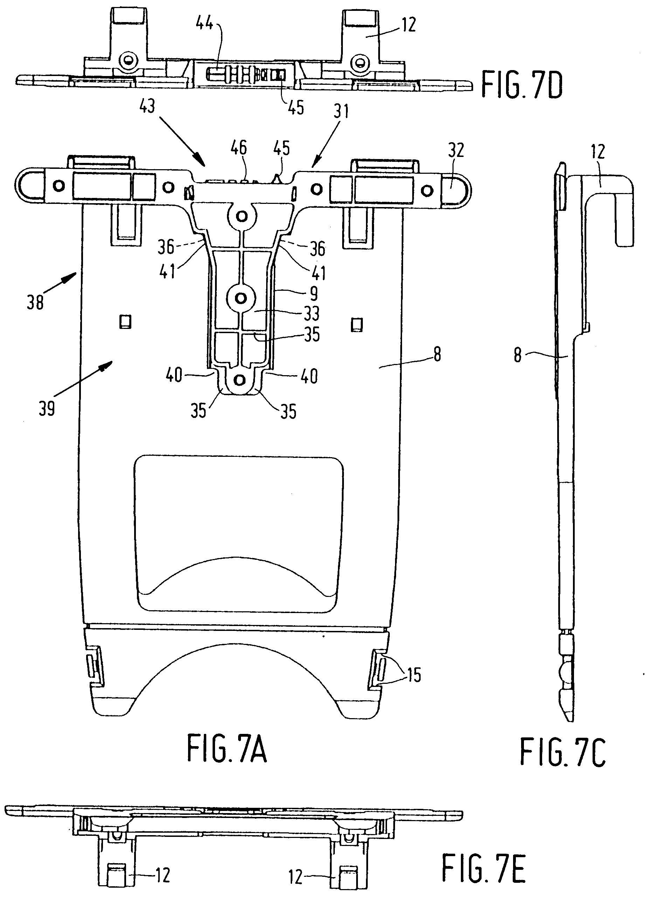

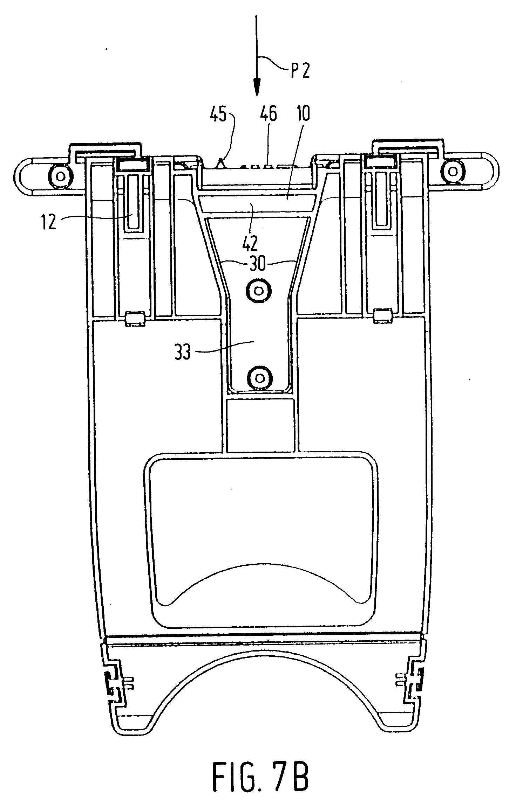

Figures 7A-E show a front view, a rear view, a plan view and a bottom view respectively of an assembly according to the invention. Assembly 38 comprises a first coupling element 31 as shown in Figures 6A and 6B, and a second coupling element 39. Second coupling element 39 comprises a plate 8 which is provided with two parallel plate-shaped parts 9, 10 and two spaced-apart guide walls 30. Plate-shaped part 9 comprises two pairs of flanges 40, 41, which extend from guide walls 30. Plate-shaped part 10 comprises a bridge 42 connected to both guide walls 30. Like the coupling element shown in Figures 1 - 5, second coupling element 39 is provided with means for attaching coupling element 39 to a luggage carrier or other part of a bicycle.

In order to couple first coupling element 31 to second coupling element 39 the plate-shaped part 33 of the first coupling element 39 is moved into the recess defined by bridge 42, flanges 40, 41 and guide walls 30 in a direction indicated by arrow P2, until strip 32 is supported on the upper side of second coupling element 39. The rear side of the bag thereby butts against plate-shaped part 9. Plate-shaped parts 35, 36 of first coupling element 31 are positioned opposite flanges 40, 41 of the second coupling element. As a result of this first coupling element 31 is prevented from moving with respect to second coupling element 39 in a direction transversely to the plane of the drawing. Guide walls 30 prevent first coupling element 31 from moving in a direction transversely to the direction of insertion P2. Assembly 38 is provided with a locking mechanism to prevent first coupling element 31 from moving in a direction opposite the direction indicated by arrow P2. Locking mechanism 43 comprises a slide 44 connected to first coupling element 31, which can be moved in a direction indicated by arrow P3 by means of a knob 45. Slide 44 can be locked in position with respect to first coupling element 31 by means of a combination lock 46. The second coupling element comprises a slot 47, in which slide 44 is movable, whereby first coupling element 31 is connected to second coupling element 39 in the situation in which slide 44 is positioned within slot 47.

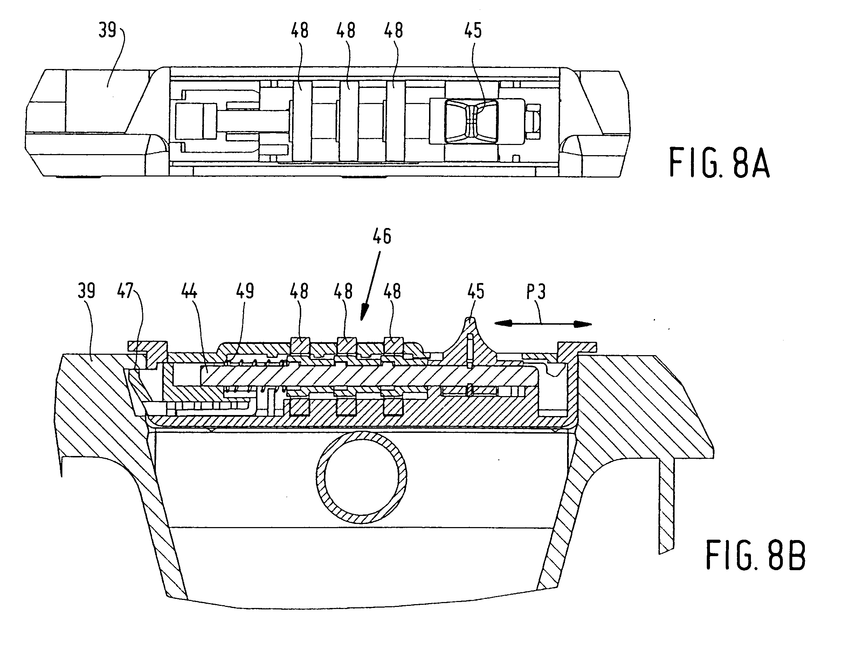

Figures 8A and 8B show the locking mechanism 43 in more detail. The combination lock comprises three rotatable wheels 48 provided with digits, by means of which a deciphering code can be adjusted. Slide 44 can be moved to the right against the spring force of a spring 49 by means of knob 45. When knob 45 is released, slide 44 will automatically move to the left and come into engagement with slot 47 when first coupling element 31 is inserted into second coupling element 39.

## Claims

1. An assembly for attaching a bag to a bicycle, which assembly comprises a first coupling element, which is secured to said bag, and a second coupling element, which can be secured to said bicycle, which coupling elements can be detachably coupled together, whereby said first coupling element comprises a plate-shaped hook, which is connected, at least near an upper side, to a rear wall of said bag and which is spaced from said rear wall near a bottom side, characterized in that said second coupling element comprises a recess which is open to an upper side, which recess is defined by two parallel plate-shaped parts and two guide walls extending substantially transversely to said plate-shaped parts, by means of which said plate-shaped parts are interconnected, whilst the plate-shaped parts extend at least partially between the guide walls, whereby the plate-shaped hook of the first coupling element is moved into the recess in a direction of insertion upon being coupled to the second coupling element and is blocked against movement in a plane transversely to the direction of insertion by said plate-shaped parts and said guide walls.

2. An assembly according to claim 1, characterized in that said assembly is provided with a locking mechanism, by means of which the plate-shaped hook can be locked against movement parallel to the direction of insertion.

3. An assembly according to claim 2, characterized in that said locking mechanism comprises a cam provided near the upper side of said hook and a recess provided in said second coupling element, whereby said cam can be locked in position in said recess.

4. An assembly according to claim 3, characterized in that said cam can be locked in position within said recess by means of a cover element which is rotatably mounted on said second coupling element, which cover element is capable of rotation about an axis extending perpendicularly to said plate-shaped parts.

5. An assembly according to claim 2, characterized in that said locking mechanism comprises a movable slide provided within said plate-shaped hook and a slot provided in said second coupling element, whereby said slide can be moved into and out of said slot.

6. An assembly according to claim 5, characterized in that said slide is provided with a combination lock, by means of which said slide can be locked against movement.

7. An assembly according to any one of the preceding claims, characterized in that said second coupling element is near one end provided with at least one hook which can engage round said bicycle.

8. An assembly according to claim 7, characterized in that said second coupling element is near a second end provided with a band which can be fixed round said bicycle.

9. An assembly according to claim 7, characterized in that said U-shaped hook is provided with a fixing block which is movable with respect to said U-shape, by means of which fixing block an open side of said U-shape can be closed.

10. A bag suitable for the assembly according to any one of the preceding claims.

11. A coupling element suitable for an assembly according to any one of the preceding claims.
